Europäisches Patentamt

European Patent Office

Office européen des brevets

(19)

(11) Numéro de publication : **0 346 554 B1**

(12) **FASCICULE DE BREVET EUROPEEN**

(45) Date de publication du fascicule du brevet :
**18.09.91 Bulletin 91/38**

(21) Numéro de dépôt : **88440048.2**

(22) Date de dépôt : **17.06.88**

(51) Int. Cl.⁵ : **E02B 3/06**

(54) Structure atténuatrice de la houle.

(43) Date de publication de la demande :
**20.12.89 Bulletin 89/51**

(45) Mention de la délivrance du brevet :
**18.09.91 Bulletin 91/38**

(84) Etats contractants désignés :
**AT BE CH DE ES FR GB GR IT LI LU NL SE**

(56) Documents cités :
**DE-A- 2 758 739**
**FR-A- 2 234 779**
**US-A- 2 827 769**
**US-A- 3 538 710**
**US-A- 3 785 159**

(73) Titulaire : **PRINCIPIA RECHERCHE DEVELOPPEMENT SA**
**Place Sophie Laffitte SOPHIA ANTIPOLIS**
**F-06560 Valbonne (FR)**

(72) Inventeur : **Guevel, Pierre**
**Mas Noune Chemin du Riou Merlet**
**F-06740 Chateauneuf de Grasse (FR)**

(74) Mandataire : **Bossard, Jacques-René**
**Cabinet MEYER & COURTASSOL Bureau**
**EUROPE 20 Place des Halles**
**F-67000 Strasbourg (FR)**

EP 0 346 554 B1

## Description

La présente invention concerne un aménagement destiné à être apporté aux faces ou parois verticales d'ouvrages ou structures susceptibles d'être soumis à la houle ou à des phénomènes périodiques similaires, en vue de briser ou d'absorber ladite houle.

De tels phénomènes sont observés dans plusieurs circonstances conduisant à des effets comparables.

Ainsi, bien entendu, l'invention vise en premier lieu la protection des ouvrages côtiers contre la houle naturelle, qui peut atteindre des creux dépassant 10 mètres. Actuellement, la protection la plus courante consiste à prévoir, au-dessus de ces ouvrages, tels que la jetée d'un port, des massifs ou gradins d'une hauteur correspondant aux creux prévisibles. Ce moyen, bien que coûteux, demeure toutefois d'une efficacité problématique, dans la mesure où la hauteur de ces massifs est généralement inférieure aux houles les plus fortes, supposées rarissimes, mais qui provoquent le plus de dégats, car elles passent par dessus les massifs et atteignent la zone supposée protégée.

Un problème comparable se rencontre dans les bassins où une houle artificielle est créée pour permettre l'observation du comportement d'un obstacle à l'égard de cette houle. La réflexion, sur les parois longitudinales dudit bassin, de la houle secondaire créée par ledit obstacle, transversalement au bassin, vient se composer avec cette houle secondaire, brouillant les observations recherchées, et les rendant pratiquement inexploitables.

Pour briser cette houle secondaire, il est connu de placer le long des parois du bassin des moyens d'amortissement constitués par des grilles à mailles très fines logées sur toute la hauteur de niches disposées tout le long desdites parois. Ces "amortisseurs" sont efficaces, mais relativement très coûteux. Au surplus ces grilles métalliques sont sensibles à la corrosion.

La présente invention élimine tous les inconvénients des moyens précités ainsi que des autres, non cités ici car moins couramment utilisés, grâce à une structure ayant pour effet d'absorber complètement toute houle incidente, quelle que soit son orientation et son amplitude.

Il a déjà été proposé, dans le US-A-3,785,159, de disposer au dessous et au voisinage de la surface d'une masse d'eau, transversalement par rapport au trajet de vagues incidentes, en vue d'atténuer lesdites vagues, une pluralité de plaques rigides montées parallèles à distance les unes des autres. Toutefois, une telle structure utilise des surfaces essentiellement galbées, qui créent entre elles des passages également galbés modifiant le trajet de l'eau en créant un courant fluide en vue de récupérer l'énergie desdites vagues, ce system étant donc, dans son principe comparable à une Turbine de Kaplan.

Au contraire, la structure selon la présente invention comporte une pluralité de plaques planes verticales et de hauteur croissante, c'est à dire dont le bord supérieur s'élève d'une plaque à la suivante dans la direction de déplacement desdites vagues, le bord inférieur étant espacé du fond d'une distance verticale permettant la circulation de l'eau, de manière telle que l'eau constituant chaque vague passant par dessus une première plaque, mais étant arrêtée par la plaque suivante, tombe dans l'espace vertical défini entre ces deux plaques et s'écoule ensuite librement dans la direction opposée par dessous ladite première plaque.

La structure selon l'invention comprend donc une série d'écrans ou respectivement de plaques parallèles entre eux et non parallèles à la direction de cheminement de la houle, la hauteur de ces écrans croissant dans ladite direction, et la base de ces écrans étant espacée du fond d'une distance verticale permettant la circulation de l'eau tout en créant une perte de charge non négligeable dans cet écoulement.

Dans la pratique, ces écrans consistent de préférence en des plaques minces de béton perpendiculaires à la direction générale d'incidence de la houle à éteindre, et construites d'un bout à l'autre de la paroi à protéger, l'arête inférieure de chacune de ces plaques étant suffisamment éloignée du fond pour permettre la circulation de l'eau ayant pénétré dans le système par les espaces existant entre les arêtes supérieures de ces plaques, mais suffisamment proche pour absorber un maximum de l'énergie créée par la houle.

En d'autres termes, la distance de l'arête inférieure de chaque plaque au fond est de préférence calibrée en fonction de la hauteur de la colonne d'eau pénétrant entre cette plaque et la suivante, de manière à provoquer sur l'écoulement de l'eau de cette colonne la perte de charge maximale.

Cette structure de base peut être réalisée de plusieurs manières différentes, selon les circonstances et les objectifs à atteindre :

Dans le cas de la protection de la jetée d'un port contre la houle naturelle provenant du large, la structure sera approximativement perpendiculaire à la direction générale la plus fréquente de la houle, et sera seulement partiellement immergée, les arêtes supérieures d'au moins l'une de ces plaques étant situées hors de l'eau.

Dans le cas de l'extinction de la réflexion de la houle secondaire créée dans un bassin fermé à houle artificielle par un obstacle lui-même mobile, la structure sera répartie parallèlement le long des deux parois longitudinales du bassin, de manière à ne pas faire obstacle à la houle incidente principale, les arêtes supérieures étant également hors de l'eau, au moins pour une partie des plaques.

Dans d'autres cas, la structure pourra être flottante, supportée par flotteurs amarrés par des cables ou des pieux à des moyens d'ancrage au fond ; dans le cas de relativement grandes profondeurs, cet ancrage pourra se faire sur une plate forme intermédiaire, elle même ancrée au fond.

L'orientation des plaques, bien que préférentiellement perpendiculaire à la direction de la houle, pourra être plus ou moins oblique, étant évidemment bien entendu que quand l'orientation des plaques se rapprochera de celle de la houle incidente, celle-ci sera de moins en moins brisée. Le dessin annexé illustrera l'invention par référence à deux applications possibles. Sur ce dessin :

— La figure *1* est un schéma en perspective illustrant le principe de l'invention,

— La figure *2* est une coupe verticale transversale partielle d'un bassin à houle équipé selon l'invention,

— et les figures *3A* à *3C* sont des coupes transversales d'une jetée de protection d'un port, construite de façon traditionnelle sur la figure *3A* et comportant les aménagements selon l'invention sur les figures *3B* et *3C*.

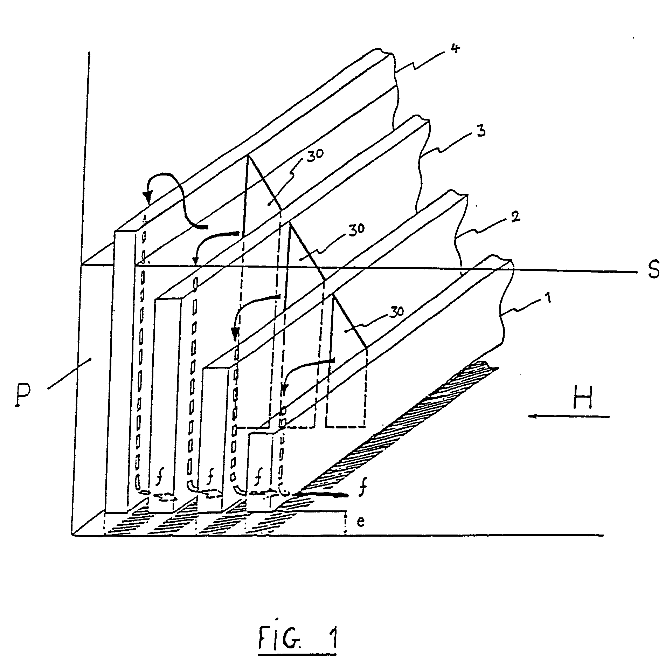

En se référant tout d'abord à la figure *1*, on y a représenté schématiquement une paroi verticale *P*, délimitant un fond *F* et devant être protégée contre l'action d'une houle se déplaçant dans la direction *H*.

Selon l'invention, à une distance e du fond *F*, sont édifiées des plaques minces *1, 2, 3, 4*, parallèles entre elles, perpendiculaires à la direction *H* d'incidence de la houle, et de hauteur croissante dans la direction *H*, de telle manière qu'au moins la dernière, *4*, émerge de la surface *S*.

De préférence les plaques *1-4* sont maintenues en place parallèles entre elles par des moyens tels que entretoises transversales, dont un exemple est représenté par les plaques *30* sur la figure *1*.

La masse d'eau en mouvement représentant la houle *H*, rencontrant les cloisons *1-4*, suivra le trajet indiqué par les flèches *f*, c'est-à-dire s'engouffrera verticalement entre les plaques *1-4* pour resurgir à l'avant de la structure en étant préalablement laminée entre les arêtes inférieures des plaques et le fond *F*, ce qui détermine une perte de charge importante le long de cet écoulement. La houle est donc "éteinte" par lesdites plaques avant d'atteindre la paroi *P*, qui se trouve donc protégée contre ses effets et conséquences.

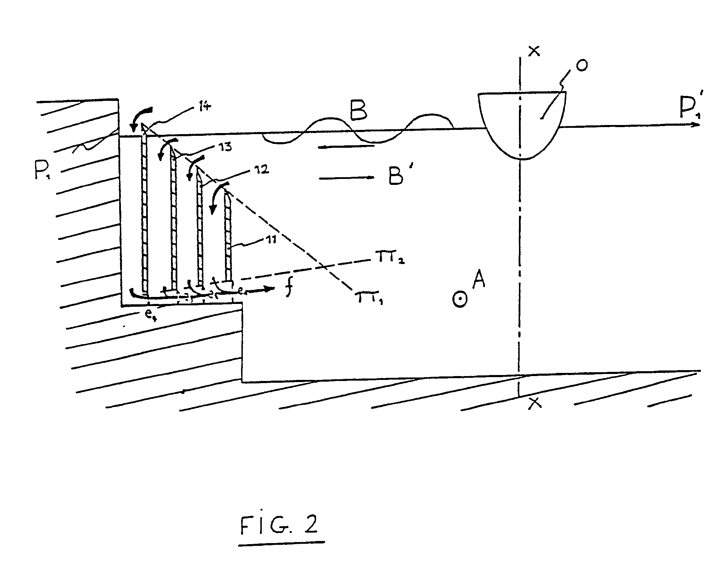

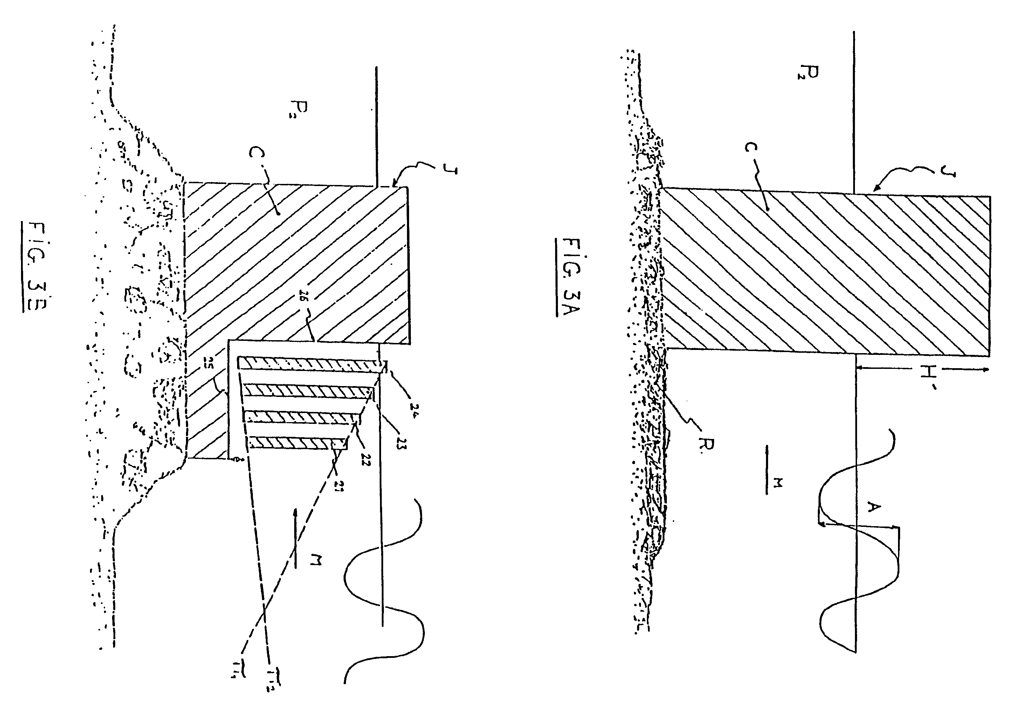

La première application de ce système est illustrée à la figure *2*, qui montre (en demi-coupe transversale) un bassin d'essai de génie océanique dans lequel un obstacle *0*, tel qu'une carène de navire, est soumis aux effets d'une houle artificielle primaire se déplaçant dans la direction A, perpendiculaire au plan de la figure. Cette houle primaire donne naissance à une houle secondaire *B*, se déplaçant perpendiculairement à la précédente, de l'obstacle *0* vers les parois longitudinales *P1* (et *P'1* non représentée) du bassin. Pour éviter que, par réflexion sur *P1*, la houle secondaire *B* ne créée une houle réfléchie *B'* qui, en se composant avec *B* ne vienne fausser toutes les mesures, l'invention consiste à disposer, sur toute la longueur de *P1* une série de plaques minces *11, 12, 13, 14...*, parallèles à *P1* et de hauteur croissante dans la direction *B*. Ces plaques sont réalisées, dans cette application, sous forme de voiles minces, d'une épaisseur de l'ordre du centimètre, en contreplaqué, tôle métallique, composites de résine synthétique armée et analogues. Elles sont immobilisées par des entretoises semblables aux éléments *30* de la figure *1*, et non visibles sur cette figure 2, et elles sont espacées du fond *F1* de distances *e1, e2, e3, e4...*, décroissantes dans la direction *B* comme il sera expliqué ci-après. La houle *B* sera éteinte par le phénomène de circulation illustré par les flèches *f*, comme décrit ci-dessus à propos de la figure 1, de sorte qu'à l'arrivée au niveau *P1* elle aura perdu toute son énergie et que la houle réfléchie *B'* sera donc pratiquement inexistante, ce qui élimine le phénomène parasite précité.

Le résultat recherché résultant du laminage de l'eau entre le fond *F1* et les arêtes inférieures des plaques *11, 12...*, l'espace *e1* entre la base de la plaque *11* et le fond *F1* pourra être plus grand que l'espace *e4* entre la plaque *14* et le fond *F1*, puisque la colonne d'eau créée entre *11* et *12* sera plus faible que celle créée entre *14* et *P1*. On peut donc, en règle générale, définir les écrans constituant la structure protectrice selon l'invention comme formant une série de plaques définies entre deux plans obliques π1 et π2 *convergeant vers le plan axial du bassin*.

On notera dans ce cas que les plaques *11, 12, 13...* étant très minces et parallèles à la houle artificielle A, elles ne perturbent en aucune façon son déplacement, ni les courants incidents éventuels, alors que les systèmes à grille antérieurs exerçaient un effet de freinage latéral préjudiciable à la précision des essais.

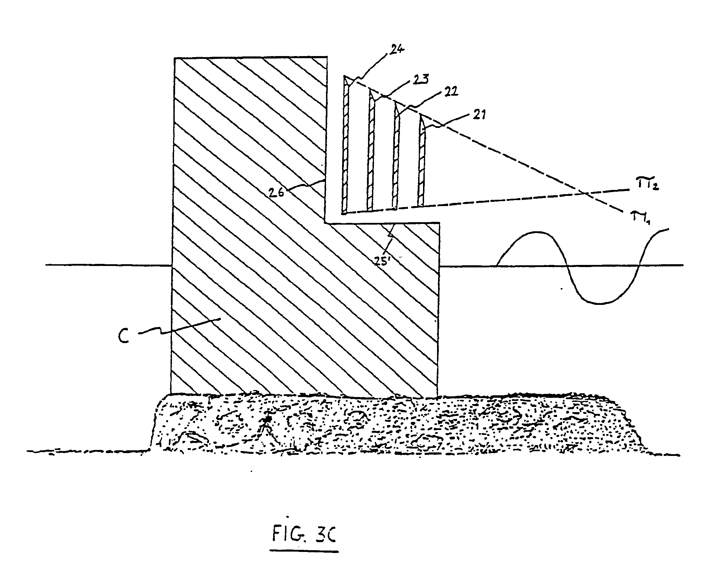

La seconde application de l'invention est illustrée aux figures *3A* à *3C* qui représentent chacune en coupe transversale une jetée *J* protégeant un port *P2* contre la houle *M* provenant de la pleine mer. Une telle jetée est constituée traditionnellement de caissons préfabriqués *C* posés sur un radier d'enrochement *R*. La houle *M* pouvant atteindre une amplitude *A* dépassant 10 mètres, on est obligé de prévoir des moyens de protection importants. Les moyens traditionnels, illustrés à la figure *3A* consistent à donner à ces caissons *C* une hauteur *H'* au-dessus du niveau de la mer considérée comme suffisamment supérieure à l'amplitude *A*. Malheureusement, bien que cette solution soit coûteuse, on n'est jamais à l'abri de phénomènes météorologiques exceptionnels —mais dévastateurs, même s'ils sont rarissimes.

L'application de l'invention à cette situation consiste comme l'illustrent les figures *3B* et *3C* à remplacer ces caissons par une structure en plaques selon l'invention beaucoup plus simple et dont l'efficacité est assurée quelle que soit l'amplitude *A*.

Cette structure est conforme à celle schématisée à la figure *1* et se compose d'une série d'écrans *21, 22, 23, 24...* disposés parallèlement à la face avant *26* de la jetée *J*, perpendiculairement à la direction de la houle incidente *M*. Ces écrans sont situés au-dessus d'un épaulement *25* des caissons *C*, à une distance e pouvant être constante ou modulée comme illustré à la figure *2*.

Dans le cas de la figure *3B*, l'épaulement *25* est immergé et la plus grande partie des écrans *21-24* sont également au-dessous du niveau de la mer.

Dans la variante de la figure *3C*, l'épaulement *25* est au-dessus du niveau moyen de la mer de sorte que les écrans *21-24* sont totalement émergés.

Dans les deux cas, grâce à cette structure, la houle incidente est pratiquement éteinte quand elle parvient à la face avant *26* du caisson, et ne risque donc pas de passer par dessus ledit caisson pour atteindre le port *P2*.

Bien entendu, si la jetée *J* n'est pas rectiligne, les plaques pourront suivre la même ligne, étant entendu qu'elles conservent leur efficacité tant qu'elles ne sont pas parallèles à la direction de la houle incidente.

A titre d'exemple indicatif, en se référant à la figure *2*, la largeur du fond *F1* peut être de 1,50 m, la hauteur de la paroi *P1* est de 2,50 m et la distance e moyenne est de 3-4 cm. Par ce moyen simple et peu coûteux, on a ainsi créé une cuve anéchoïque à la houle.

Bien entendu, les deux exemples précédents n'ont aucun caractère limitatif, les structures selon l'invention pouvant trouver de nombreuses autres applications pour lesquelles elles seront aménagées, notamment sous forme de structures flottantes pour ouvrages côtiers ou off-shores, ou installations expérimentales, scientifiques et/ou industrielles.

Plus généralement encore, on peut considérer que l'invention consiste dans l'association, à toute enceinte, ouverte (mer) ou fermée (bassin) remplie d'une masse d'eau animée d'un mouvement périodique, d'une structure telle que définie précédemment, en vue de rendre cette enceinte non réverbérante.

## Revendications

1. Structure disposée au-dessous et au voisinage de la surface (5) d'une masse d'eau, transversalement par rapport au trajet (H) de vagues incidentes en vue d'atténuer lesdites vagues, du type comprenant une pluralité de plaques rigides montées parallèlement à distance les unes des autres, caractérisée en ce que lesdites plaques (1, 2, 3, 4) sont planes, verticales et de hauteur croissante, c'est à dire dont le bord supérieur s'élève d'une plaque à la suivante, dans la direction de déplacement (H) desdites vagues, le bord inférieur étant espacé du fond d'une distance verticale (e) permettant la circulation de l'eau, de manière telle que l'eau constituant chaque vague passant par dessus une première plaque mais étant arrêtée par la plaque suivante tombe dans l'espace vertical défini entre ces deux plaques et s'écoule ensuite librement dans la direction opposée par dessous ladite première plaque.

2. Structure selon la revendication 1, caractérisée en ce que ladite distance verticale (e) du bas de chaque écran (1, 2, 3, 4) au fond est calibrée en fonction de la hauteur d'eau pénétrant entre cet écran et l'écran suivant de manière à provoquer la perte de charge maximale.

3. Structure selon les revendications 1 et 2, caractérisée en ce qu'elle est destinée à la protection contre la houle naturelle de la jetée (J) d'un port, ladite structure étant approximativement perpendiculaire à la direction générale la plus fréquente de ladite houle, et les arêtes supérieures d'au moins l'un desdits écran étant situé au-dessus du niveau normal de la mer.

4. Structure selon les revendications 1 et 2, caractérisée en ce qu'elle est destinée à la suppression de la réflexion de la houle secondaire (B) créée dans un bassin à houle artificielle par un obstacle mobile (O), ladite structure étant répartie parallèlement le long des deux parois longitudinales (P) dudit bassin, les arêtes supérieures d'au moins l'une (14) desdites cloisons étant située au-dessus du niveau normal de l'eau dans ledit bassin.

5. Structure selon l'une des revendications 1 et 2, caractérisée en ce qu'elle est construite sur des flotteurs ancrés sur le fond par l'intermédiaire de cables ou de pieux.

6. Structure selon l'une quelconque des revendications précédentes, caractérisée en ce qu'elle est associée à une paroi soumise à l'action d'une masse d'eau animée d'un mouvement périodique en vue de rendre cette enceinte non réverbérante.

## Patentansprüche

1. Konstruktion, die unter sowie benachbart zu der Oberfläche (S) einer Wassermasse quer mit Bezug zur Bahn (H) der einfallenden Wellen im Hinblick auf ein Dämpfen dieser Wellen angeordnet und von der Art ist, die eine Mehrzahl von steifen, parallel mit Abstand von der einen zur anderen montierten Platten umfaßt, dadurch gekennzeichnet, daß diese Platten (1, 2, 3, 4) eben, vertikal sowie von zunehmener Höhe sind, d.h., daß deren Oberkante von einer Platte zur folgenden hin in der Richtung der Verlagerung (H) der erwähnten Wellen höher wird, wobei die Unterkante vom Boden mit einem vertikalen Abstand (e) entfernt ist, der den Wasserumlauf in der Weise zuläßt, daß das jede Welle bildende, über eine erste Platte hinweggehende, aber durch die folgende Platte aufgehaltene Wasser in dem vertikalen, zwischen den zwei Platten begrenzten Raum abwärts fällt und dann frei in der entgegengesetzten Richtung unter der erwähnten ersten Platte hindurch abfließt.

2. Konstruktion nach Anspruch 1, dadurch gekennzeichnet, daß der erwähnte vertikale Abstand (e) unter jeder Schutzwand (1, 2, 3, 4) im wesentlichen als Funktion der Höhe des zwischen dieser Schutzwand und der folgenden Schutzwand hindurchtretenden Wassers in der Weise bemessen wird, daß der maximale Druckverlust hervorgerufen wird.

3. Konstruktion nach den Ansprüchen 1 und 2, dadurch gekennzeichnet, daß diese zum Schutz der Mole (J) eines Hafens gegen die natürliche Dünung bestimmt ist, wobei diese Konstruktion annähernd rechtwinklig zur allgemein häufigsten Richtung dieser Dünung verläuft und die oberen Kanten von wenigstens einer der besagten Schutzwände oberhalb des normalen Meeresspiegels liegen.

4. Konstruktion nach den Ansprüchen 1 und 2, dadurch gekennzeichnet, daß diese zur Unterdrückung der Reflexion der in einem künstlichen Wellenbecken durch einen bewegbaren Widerstandskörper (O) erzeugten Sekundärwelle (B) bestimmt ist, wobei diese Konstruktion parallel längs der beiden Längswände (P) des genannten Beckens verteilt ist und die oberen Kanten von wenigstens einer der erwähnten Zwischenwände oberhalb des normalen Wasserstandes in dem genannten Becken angeordnet sind.

5. Konstruktion nach einem der Ansprüche 1 und 2, dadurch gekennzeichnet, daß diese auf Schwimmern, die mit Hilfe von Kabeln oder von Pfählen am Boden verankert sind, aufgebaut ist.

6. Konstruktion nach irgendeinem der vorhergehenden Ansprüche, dadurch gekennzeichnet, daß diese einer der Wirkung einer durch eine periodische Bewegung erregten Wassermasse ausgesetzten Wand im Hinblick darauf, diese Umfassung unreflektierend zu machen, zugeordnet ist.

## Claims

1. A structure located above and adjacent to the surface (5) of a water body, transversely with respect to the path (H) of the incident waves, in order to attenuate the said waves, of the type comprising a plurality of rigid plates mounted in parallel at a distance from each other, characterised in that the said plates (1, 2, 3, 4) are flat, vertical and of increasing height, i.e. the top edge gets higher from one plate to the next in the direction of movement (H) of the said waves, the bottom edge being raised off the bottom by a vertical distance (e) for the circulation of water in such a way that the water in each wave which passes over a first plate but is stopped by the next plate falls into the vertical space formed between the two plates and then flows freely in the opposite direction beneath the said first plate.

2. A structure according to claim 1, characterised in that the said vertical distance (e) between the base of each screen (1, 2, 3, 4) and the bottom is gauged in relation to the height of water penetrating between this screen and the next in such a way as to cause the maximum loss of head.

3. A structure according to claims 1 and 2, characterised in that it is designed to protect the jetty (J) of a port against natural swell, the said structure being approximately perpendicular to the most frequent general direction of the said swell, and the upper edges of at least one of the said screens being located above normal sea level.

4. A structure according to claims 1 and 2, characterised in that it is designed to prevent the reflection of secondary swell (B) created in an artificial swell basin by a moving obstacle (O), the said structure being located parallel to the two longitudinal walls (P) of the said basin, the upper edges of at least one (14) of the said partitions being located above the normal level of water in the said basin.

5. A structure according to either of claims 1 and 2, characterised in that it is constructed on pontoons anchored to the bottom by cables or piles.

6. A structure according to any one of the foregoing claims, characterised in that it is associated with a wall subject to the force of a mass of water driven into periodical motion in order to render the enclosure non-resonant.

FIG. 1

FIG. 2

FIG. 3A

FIG. 3B

FIG. 3C